(19) Europäisches Patentamt
European Patent Office
Office européen des brevets

(11) **EP 0 735 710 A2**

(12) **EUROPÄISCHE PATENTANMELDUNG**

(43) Veröffentlichungstag:
02.10.1996 Patentblatt 1996/40

(51) Int. Cl.$^6$: **H04J 14/08**

(21) Anmeldenummer: 96104637.2

(22) Anmeldetag: 23.03.1996

(84) Benannte Vertragsstaaten:
CH DE ES FR GB IT LI SE

(30) Priorität: 30.03.1995 DE 19511819

(71) Anmelder: Alcatel SEL Aktiengesellschaft
D-70435 Stuttgart (DE)

(72) Erfinder: Bülow, Henning, Dr.
70597 Stuttgart (DE)

(74) Vertreter: Schätzle, Albin, Dipl.-Phys. et al
Alcatel Alsthom
Intellectual Property Department,
Postfach 30 09 29
70449 Stuttgart (DE)

(54) **Vorrichtung zum Demultiplexen eines optischen Digitalsignals**

(57) Es ist eine Vorrichtung zum Demultiplexen angegeben, die einen Pulsgenerator (4), eine Phasenregeleinrichtung (3) und eine optische Schalteinrichtung (1), z. B. einen NOLM, hat. Die Phasenregeleinrichtung (3) steuert den Pulsgenerator (4), dessen Puls in der optischen Schalteinrichtung (1) Schaltvorgänge auslöst, in Abhängigkeit von einem vom Ausgang (8) der optischen Schalteinrichtung (1) abgeleiteten elektrischen Signal. In der Phasenregeleinrichtung (3) ist eine Störquelle (26) vorhanden, die den Puls definiert stört.

Fig.1

**Beschreibung**

Die Erfindung betrifft eine Vorrichtung zum Demultiplexen eines optischen Digitalsignals gemäß dem Oberbegriff des Patentanspruchs 1.

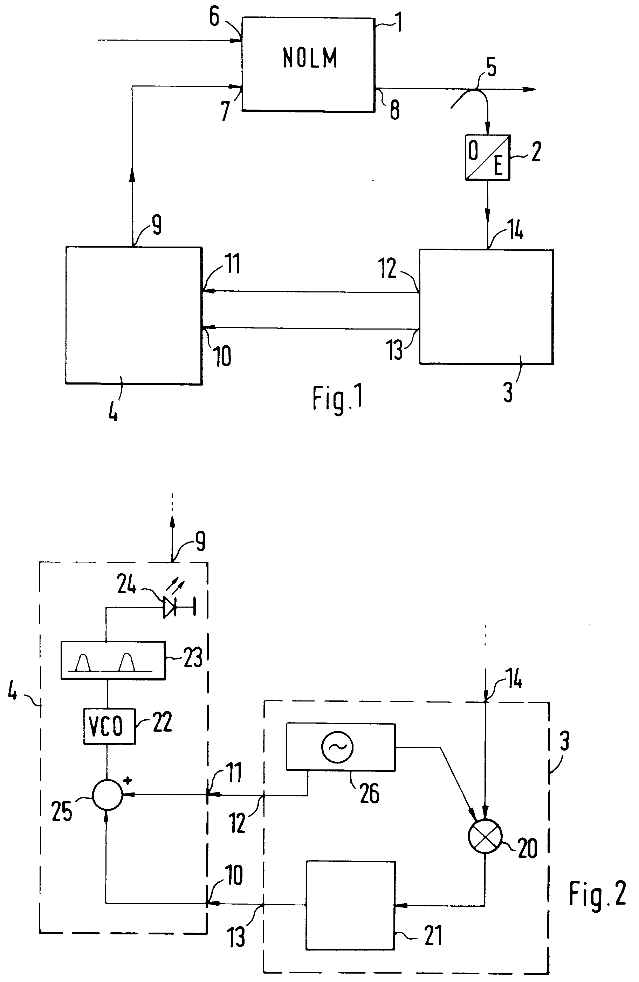

Eine solche Vorrichtung zum Demultiplexen ist z.B. aus T. Saito et al, "10-GHz timing extraction from a 20-Gbit/s optical data stream by using a newly proposed optical phase-locked loop", OFC '94, Technical Digest, Seiten 61 und 62 bekannt. In der dortigen Fig. 1 ist ein experimenteller Aufbau gezeigt, bei dem in einem Empfänger eine optische Phasenregeleinrichtung (optical PLL) und ein "nonlinear-optical-loop-mirror (NOLM)" als Demultiplexer vorhanden ist. Der NOLM-Demultiplexer hat einen Eingang für ein optisches Signal mit einer Bitfolgefrequenz von 20 GBit/s und einen Eingang für einen von einem optischen Pulsgenerator erzeugten Puls. Die optische Phasenregeleinrichtung leitet aus dem optischen Signal mit der Bitfolgefrequenz von 20 GBit/s ein elektrisches Signal mit einer Frequenz von 10 GHz ab. Mit diesem elektrischen Signal wird der optische Pulsgenerator gesteuert, dessen optischer Puls eine Impulsfolgefrequenz von 10 GHz hat. An einem Ausgang des derart gesteuerten NOLM-Demultiplexer tritt ein Teil des optischen Signals aus, dieser Teil des optischen Signals hat eine Bitfolgefrequenz von 10 GBit/s.

Der NOLM-Demultiplexer nimmt aus dem optischen Signal mit der Bitfolgefrequenz von 20 GBit/s jedes zweite Bit heraus, es entsteht das optische Signal mit der Bitfolgefrequenz von 10 GBit/s. Damit die Bits exakt herausgenommen werden können, müssen die vom Pulsgenerator erzeuten optischen Impulse synchron mit jedem zweiten Bit sein. Dies wird durch die optische Phasenregeleinrichtung erreicht.

Die Funktionsweise eines NOLM als Demultiplexer ist bekannt: Im NOLM wird das optische Signal in einen links- und einen rechtsumlaufenden Lichtanteil aufgeteilt, die sich in einem Kopplungsbereich überlagern können. Wird kein optischer Schaltimpuls zugeführt, besteht zwischen den beiden gegensinnig umlaufenden Lichtanteilen nach einem Umlauf kein Phasenunterschied, d.h. $\Delta\phi = 0$. Wird dagegen ein optischer Puls derart zugeführt, daß ein Impuls und ein Lichtanteil gleichsinnig und zeitgleich umlaufen, so erfährt der Lichtanteil einen Phasenunterschied von $\Delta\phi = -\pi$, d.h. der Lichtanteil, der sich parallel dem Impuls ausbreitet, erfährt eine Verzögerung (Abhängigkeit des Brechungsindex von der optischen Leistung, Kerr-Effekt).

Die in Fig. 1 gezeigte optische Phasenregeleinrichtung erfordert einen hohen Aufwand, da sie für Signale mit einer hohen Bitfolgefrequenz geeignet sein muß: Der Pulsgenerator muß exakt gesteuert werden. Hinzu kommt, daß im optischen Empfänger zwei "schnelle", d.h. für Signale einer hohen Bitfolgefrequenz geeignete Einrichtungen notwendig sind: Sowohl der "schnelle" Schalter (NOLM) als auch die "schnelle" optische Phasenregeleinrichtung. Ein solcher optischer Empfänger ist teuer.

Der Erfindung liegt die Aufgabe zugrunde, eine Vorrichtung zum Demultiplexen anzugeben, bei der die Steuerung des Pulsgenerators mit geringem Aufwand möglich ist. Ein die Aufgabe lösende Vorrichtung zum Demultiplexen ist Gegenstand des Patentanspruchs 1. Vorteilhafte Ausgestaltungen der Erfindung sind in den Unteransprüchen angegeben.

Ein Vorteil der Erfindung ist, daß die Regelelektronik der Vorrichtung zum Demultiplexen nur für niedrige Frequenzen (z. B. kleiner 100 kHz) ausgelegt zu sein braucht, obwohl die Vorrichtung zum Demultiplexen für Signale mit einer hohen Bitfolgefrequenz im Gbit/s-Bereich geeignet ist.

Die Erfindung wird im folgenden beispielhaft anhand von Zeichnungen näher erläutert. Es zeigen:

Fig. 1     ein Blockschaltbild einer Vorrichtung zum Demultiplexen, und

Fig. 2     Details eines im Blockschaltbild gezeigten Pulsgenerators und einer Phasenregeleinrichtung.

In Fig. 1 ist ein Blockschaltbild einer Vorrichtung zum Demultiplexen eines optischen Digitalsignals mit einer festgelegten Bitfolgefrequenz gezeigt. Eine optische Schalteinrichtung 1 hat einen Eingang 6 für das optische Digitalsignal, einen Eingang 7 für einen von einem Pulsgenerator 4 erzeugten Puls und einen Ausgang 8 für einen herausgenommenen Teil des optischen Digitalsignals. Mit dem Ausgang 8 der optischen Schalteinrichtung 1 ist ein Koppler 5 verbunden, der einen Teil des Lichts (Teil des herausgenommenen optischen Digitalsignals) einem optoelektrischen Wandler 2 zuführt. Der optoelektrische Wandler 2 wandelt das Licht in ein elektrisches Signal, das dem Teil des optischen Digitalsignals entspricht. Der optoelektrische Wandler 2 detektiert die mittlere optische Leistung. Das von ihm erzeugte elektrische Signal wird einem Eingang 14 einer Phasenregeleinrichtung 3 zugeführt. Ein Ausgang 13 der Phasenregeleinrichtung 3 ist mit einem Eingang 10 des Pulsgenerators 4 verbunden, und ein Ausgang 12 der Phasenregeleinrichtung 3 ist mit einem Eingang 11 des Pulsgenerators 4 verbunden. Ein Ausgang 9 des Pulsgenerators 4 ist mit dem Eingang 7 der optischen Schalteinrichtung 1 verbunden.

Bevor die Funktionsweise der erfindungsgemäßen Vorrichtung zum Demultiplexen erläutert wird, werden anhand von Fig. 2 Details des Pulsgenerators 4 und der Phasenregeleinrichtung 3 erläutert, die in Fig. 1 gezeigt sind.

Im Pulsgenerator 4 steuert ein spannungsgesteuerter Oszillator (VCO) 22 einen elektrischen Pulsgenerator 23, der einen elektrischen Puls mit einer vom spannungsgesteuerten Oszillator 22 bestimmten Impulsfolgefrequenz erzeugt. Dieser Puls wird einer Laserdiode 24 zugeführt, die den elektrischen Puls in einen optischen Puls wandelt, der dann über einen Lichtwellenleiter zum Eingang 7 (Fig. 1) der optischen Schalteinrichtung 1 (Fig. 1) gelangt. Eine ebenfalls im Pulsgenerator 4 vorhandene Addiereinrichtung 25 addiert zwei von den Eingängen 10, 11 kommende Spannungen und bildet daraus eine Abstimmspannung für den spannungsgesteuerten Oszillator 22.

Die Phasenregeleinrichtung 3 hat eine Störquelle 26, die z.B. ein Spannungsgenerator ist, der eine sinusförmige Wechselspannung mit einer Frequenz von z.B. 100 kHz erzeugt. Mit dieser sinusförmigen Wechselspannung wird der Pulsgenerator 4 definiert gestört, und zwar so, daß sich die Phase der Impulse periodisch ändert.

Die Phasenregeleinrichtung 3 hat außerdem eine Mischeinrichtung 20 und einen Regler 21 der z.B. ein PI-Regler ist. Die Mischeinrichtung 20 mischt das vom optoelektrischen Wandler 2 (Fig. 1) kommende elektrische Signal (Eingang 14) mit der von der Störquelle 26 erzeugten sinusförmigen Wechselspannung. Das Mischsignal wird dem Regler 21 zugeführt, der daraus ein Steuersignal (Steuerspannung) für den Pulsgenerator 4 erzeugt.

Die optische Schalteinrichtung 1 ist vorzugsweise ein nichtlineares Sagnac-Interferometer (NOLM), wie es z.B. aus T. Saito et al bekannt ist. Es kann aber auch ein optisch nichtlineares Mach-Zehnder Interferometer verwendet werden, das bekannt ist aus:
I. H. White et al, "Demonstration of the Optical Kerr Effect in an All-Fibre Mach-Zehnder Interferometer at Laser Diode Powers", ELECTRONICS LETTERS, 17th March 1988 Vol. 24 No. 6, Seiten 340 bis 341. Ein solches Mach-Zehnder Interferometer besteht u.a. aus zwei Glasfaserzweigen, wobei z.B. in einem nichtlineare optische Eigenschaften genutzt werden.

Alternativ dazu kann auch ein Elektroabsorptions Modulator (EAM) verwendet werden, der z.B. bekannt ist aus: F. Devaux et al, "Distribution of millimetre radiowave signals with an MQW electroabsorption modulator", Electronics Letters, 1st September 1994, Vol. 30, No. 18, Seiten 1522 bis 1524. Ein solcher Elektroabsorptions Modulator wird durch einen elektrischen Puls gesteuert, d.h. dem Eingang 7 der optischen Schalteinrichtung ist ein elektrischer Puls zuzuführen. In diesem Fall hat der Pulsgenerator 4 keine Laserdiode 24.

Im folgenden wird die Funktionsweise der Vorrichtung zum Demultiplexen eines Digitalsignals beschrieben.

Als optische Schalteinrichtung 1 wird ein nichtlineares Sagnac-Interferometer verwendet, das für die weitere Beschreibung als NOLM bezeichnet wird. Dem Eingang 6 der optischen Schalteinrichtung 1 wird ein optisches Digitalsignal mit einer Bitfolgefrequenz von z.B. 2,48 GBit/s zugeführt und es soll jedes 16te Bit herausgenommen werden, d.h. der am Ausgang 8 austretende Teil des optischen Digitalsignals hat eine Bitfolgefrequenz von 155 MBit/s. Der vom Pulsgenerator 4 erzeugte und dem Eingang 7 der optischen Schalteinrichtung 1 zugeführte optische Puls hat dafür eine Impulsfolgefrequenz von 155 MHz. Erfindungsgemäß werden die Impulse innerhalb eines Schaltfensters "gewobbelt" (mit der Frequenz der sinusförmigen Wechselspannung von z.B. 100 kHz), wobei die Phase der Impulse periodisch verändert wird. Als Schaltfenster ist der Zeitraum definiert, innerhalb dessen ein eindeutiges Herausnehmen eines Bits möglich ist. Im NOLM treten dadurch Impulse auf, die innerhalb bestimmter Grenzen einem Lichtanteil des optischen Digitalsignals voraus oder hinterher laufen. Ein dem Lichtanteil hinterher laufender Impuls überlappt den Lichtanteil nicht mehr in dem Maße, wie es ein parallel laufender Impuls tun würde: Die herausgenommene Lichtleistung (Ausgang 8) ist geringer. Als Folge davon ist der am Ausgang 8 der optischen Schalteinrichtung 1 austretende Teil des optischen Digitalsignals mit einer Amplitudenmodulation überlagert.

Die Amplitude des vom optoelektrischen Wandler 2 erzeugten elektrischen Signals ändert sich mit einer Frequenz, die abhängig ist vom Phasenunterschied zwischen Impuls und Lichtanteil. Da die Mischeinrichtung 20 das elektrische Signal mit der sinusförmigen Wechselspannung (Frequenz 100 kHz) mischt, nimmt der Betrag des sich ergebenden Mischsignals mit dem Versatz von Schaltfenster und dem herauszunehmenden Bit zu und das Vorzeichen wechselt, je nachdem, ob es einen positiven (Vorlaufen) oder negativen (Nacheilen) Versatz gibt. Aus diesem mit der Regelabweichung (entspricht dem Phasenunterschied) zunehmenden Signal erzeugt der Regler 21 eine Steuerspannung, mit der die Impulsfolgefrequenz des Pulsgenerators 4 geregelt wird.

Die Störquelle 26 muß nicht notwendigerweise ein Spannungsgenerator sein, der eine sinusförmige Wechselspannung erzeugt; er kann z.B. auch eine Sägezahnspannung erzeugen. Ausschlaggebend ist, daß der Puls definiert gestört wird, und daß sich die Störung am Ausgang 8 der optischen Schalteinrichtung 1 auswirkt, so daß daraus ein Rückschluß auf den Phasenunterschied möglich ist.

Aus der vorhergehenden Beschreibung wird deutlich, daß die optische Schalteinrichtung 1 eine Doppelfunktion hat: Sie dient als optischer Schalter und gleichzeitig als Teil eines Phasenregelkreises. Eine zusätzliche "schnelle" optische Phasenregeleinrichtung ist deshalb nicht notwendig.

**Patentansprüche**

1. Vorrichtung zum Demultiplexen eines optischen Digitalsignals einer festgelegten Bitfolgefrequenz, mit einer optischen Schalteinrichtung (1), die einen Eingang (6) für das optische Digitalsignal, einen Eingang (7) für einen von einem Pulsgenerator (4) erzeugten Puls mit einer Impulsfolgefrequenz und einen Ausgang (8) für einen Teil des optischen Digitalsignals hat,
dadurch gekennzeichnet, daß eine Phasenregeleinrichtung (3) vorhanden ist, die den Pulsgenerator (4) in Abhängigkeit von einem vom Ausgang (8) der optischen Schalteinrichtung (1) abgeleiteten elektrischen Signal steuert.

2. Vorrichtung nach Anspruch 1, bei der die Phasenregeleinrichtung (3) eine Störquelle (26) hat, die den Pulsgenerator (4) definiert stört, so daß sich aufgrund der Störung die Phase der Impulse ändert.

3. Vorrichtung nach Anspruch 2, bei der die Störquelle (26) ein Spannungsgenerator ist, der eine sinusförmige Wechselspannung erzeugt.

4. Vorrichtung nach Anspruch 3, bei der die Phasenregeleinrichtung (3) eine elektrische Mischeinrichtung (20), die das vom Ausgang (8) der optischen Schalteinrichtung (1) abgeleitete elektrische Signal mit der sinusförmigen Wechselspannung der Störquelle (26) mischt, und einen Regler (21) hat, der abhängig vom Mischsignal eine Steuerspannung für den Pulsgenerator (4) erzeugt.

5. Vorrichtung nach Anspruch 1, dadurch gekennzeichnet, daß die optische Schalteinrichtung (1) ein optisch nichtlineares Mach-Zehnder Interferometer ist.

6. Vorrichtung nach Anspruch 1, dadurch gekennzeichnet, daß die optische Schalteinrichtung (1) ein Elektroabsorptions-Modulator ist und der Pulsgenerator (4) einen elektrischen Puls erzeugt.

Fig.1

Fig.2